Europäisches Patentamt

European Patent Office

Office européen des brevets

(19)

(11) Numéro de publication : **0 472 709 B1**

(12) **FASCICULE DE BREVET EUROPEEN**

(45) Date de publication du fascicule du brevet :
**09.11.94 Bulletin 94/45**

(51) Int. Cl.⁵ : **H01Q 3/26**, G02F 1/01

(21) Numéro de dépôt : **91906464.2**

(22) Date de dépôt : **12.03.91**

(86) Numéro de dépôt international :
**PCT/FR91/00199**

(87) Numéro de publication internationale :
**WO 91/14196 19.09.91 Gazette 91/22**

(54) **DISPOSITIF DE CREATION DE RETARDS OPTIQUES ET APPLICATION A UN SYSTEME DE COMMANDE OPTIQUE D'UNE ANTENNE A BALAYAGE.**

(30) Priorité : **16.03.90 FR 9003386**

(43) Date de publication de la demande :
**04.03.92 Bulletin 92/10**

(45) Mention de la délivrance du brevet :
**09.11.94 Bulletin 94/45**

(84) Etats contractants désignés :
**DE FR GB IT NL**

(56) Documents cités :
**EP-A- 0 287 444
EP-A- 0 331 462
US-A- 4 725 844
Society of Photo-optical Instrumentation,Engineers SPIE,volume 176,1979,pages 17-27;Taylor: "Fiber and Integrated optical devices for signal processing" see page 19;figure 6
PATENT ABSTRACTS OF JAPAN volume 012,No.276(p-737) 30 July 1988**

(73) Titulaire : **THOMSON-CSF
173, Boulevard Haussmann
F-75008 Paris (FR)**

(72) Inventeur : **REFREGIER, Philippe
5, allée Louise-Bruneau
F-91120 Palaiseau (FR)**
Inventeur : **DOLFI, Daniel
19, rue Charles-de-Gaulle
F-91400 Orsay (FR)**
Inventeur : **HUIGNARD, Jean-Pierre
11, rue G.-Braque
F-75014 Paris (FR)**

(74) Mandataire : **Guérin, Michel et al
THOMSON-CSF
SCPI
B.P. 329
50, rue Jean-Pierre Timbaud
F-92402 Courbevoie Cédex (FR)**

## Description

L'invention concerne un dispositif de création de retards optiques et son application à un système de commande optique d'une antenne à balayage. Plus particulièrement cette application concerne un système de génération de retard physique pour la commande optique d'antennes à balayage. Il s'agit de simplifier la structure du système engendrant les retards optiques et de limiter le nombre d'éléments actifs permettant de sélectionner ces retards.

On connaît des systèmes permettant de contrôler par des moyens optiques le diagramme de rayonnement d'une antenne. Ils permettent de contrôler la phase du signal hyperfréquence émis par chaque élément d'antenne et dont la fréquence se situe dans la bande de fréquence 1 - 12 GHz. Le dispositif proposé assure en particulier la fonction de balayage angulaire du faisceau à partir du contrôle de la phase de chaque élément de l'antenne.

L'invention s'applique aux antennes à balayage. Les techniques actuelles de balayage sont électroniques et agissent sur les phases respectives des commandes des divers éléments rayonnants. Les éléments déphaseurs sont des dispositifs à ferrite ou à diodes PIN. Ces structures, outre leur poids et leur consommation présentent l'inconvénient de ne permettre qu'un fonctionnement à bande étroite de l'antenne. En effet, les déphaseurs n'agissent qu'entre 0 et $2\pi$, ainsi lors d'un changement de fréquence du signal émis, il y a dépointage de l'antenne. Le dispositif de commande d'antenne proposé permet la génération de retards et le fonctionnement large bande d'antenne. Celle-ci est donc alimentée en retards grâce à la commande optique, les déphaseurs hyperfréquences fournissant un réglage fin de la phase entre 0 et $2\pi$.

De plus, il est connu, notamment par le Brevet français n° 2 614 136 déposé le 14 Avril 1987 (et correspondant à EP-A-0,287,444), de réaliser optiquement des lignes à retard hyperfréquences de longueurs programmables de faible encombrement. Cela consiste à engendrer un signal hyperfréquence par battement de deux ondes lumineuses colinéaires, à faire parcourir à ces deux ondes lumineuses un trajet de longueur ajustable par des modulateurs électro-optiques à réflectivité contrôlée et à détecter le battement hyperfréquence des deux ondes lumineuses colinéaires en fin de trajet à l'aide d'un photodétecteur.

Il ressort du document US 4 725 844 qu'il est connu de créer des déphasages sur un signal optique à l'aide d'un commutateur effectuant des commutations par modification de l'indice de réfraction du chemin parcouru par le signal optique.

Selon l'art connu, il s'agit donc de coder le signal hyperfréquence, nécessaire à la commande des éléments actifs de l'antenne, sur une porteuse optique et à réaliser physiquement les retards qui permettront de déphaser ce signal hyperfréquence pour effectuer le balayage électronique propre à ce type de radar. Pour réaliser P déphasages, il est nécessaire d'engendrer P chemins optiques ayant des longueurs différentes et de choisir, soit a priori, soit a posteriori, ces retards.

Le problème principal rencontré avec les solutions jusqu'alors proposées, est la nécessité de disposer dans le système d'autant de commutateurs optiques (ou modulateurs de lumière) que de retards souhaités. Dans le cas où les retards sont choisis a priori, ceci se traduit par une complexité élevée du système, par un coût important et une atténuation éventuelle importante de l'onde optique (due aux différents modulateurs). Ces mêmes problèmes se rencontrent également quand le choix des retards est effectué a posteriori et de manière encore plus critique en ce qui concerne l'atténuation de l'onde optique.

Il est connu dans le document EP 0 331 462 de prévoir des circuits de retards optiques mais ce document prévoit des dispositifs de rotation de polarisation ce qui n'est pas le cas dans l'invention.

L'invention a pour objet de fournir un système de codage limitant la complexité du système (à nombre de retards disponibles équivalents) tout en permettant de diminuer l'atténuation de l'onde optique et ce, pour un moindre coût.

L'invention concerne donc un dispositif de création de retards optiques comprenant un premier et un deuxième commutateurs rangés selon un ordre déterminé, le premier commutateur comportant au moins une première entrée ainsi qu'au moins une première et une deuxième sorties permettant de coupler la première entrée à l'une ou l'autre des sorties, le deuxième commutateur comportant au moins une première et une deuxième entrées ainsi qu'une première sortie et permettant de coupler la première sortie à l'une ou l'autre des entrées ; ce dispositif étant arrangé de la manière suivante :

- la première entrée d'un premier commutateur est connectée à une source émettant un faisceau lumineux à traiter ;
- la première sortie du premier commutateur est connectée à la première entrée du deuxième commutateur suivant, et pour le deuxième commutateur, cette première sortie est connectée à un circuit utilisateur ;
- la deuxième sortie du premier commutateur est connectée à la deuxième entrée du commutateur suivant par l'intermédiaire d'un circuit à retard optique ; caractérisé en ce que la lumière issue de la source possède au moins deux polarisations et que chaque commutateur est un séparateur de polarisations.

L'invention concerne également un dispositif de commande optique d'une antenne à balayage comprenant ledit dispositif de création de retards optiques, caractérisé en ce qu'il comprend :

- un réseau d'un nombre déterminé d'éléments d'antenne, les différents éléments étant arrangés selon un ordre déterminé et commandés chacun par un amplificateur hyperfréquence
- une source lumineuse émettant simultanément au moins deux faisceaux colinéaires de fréquences différentes caractérisé en ce qu'il comporte également :
  - $N^2$ dispositifs à retard comportant un nombre (f11...fN.N) de trajets optiques commutables recevant les deux faisceaux colinéaires et fournissant chacun un temps de propagation optique qui lui est propre,
  - $N^2$ dispositifs photodétecteurs couplés chacun à un amplificateur hyperfréquence pour commander un élément d'antenne.

Les différents objets et caractéristiques de l'invention apparaîtront dans la description qui va suivre et dans les figures annexées qui représentent :

- la figure 1, une version de base du système de commande optique selon l'invention,
- la figure 2, un exemple de fonctionnement d'un commutateur tels que ceux utilisés dans le système de la figure 1,
- les figures 3 à 3h, des exemples de fonctionnement du système de la figure 1,
- la figure 4, un tableau de fonctionnement du système de la figure 1,
- la figure 5, une variante de réalisation du système de l'invention fonctionnant en réflexion,
- la figure 6, un exemple de réalisation détaillé du système de l'invention,
- la figure 7, un exemple de réalisation d'une application du système de l'invention à la commande d'une antenne à balayage,
- la figure 8, un exemple de réalisation d'un commutateur selon l'invention à l'aide de cubes séparateurs de polarisation,
- les figures 9a et 9b, des formes de réalisation particulières de commutateurs conforme à l'exemple de réalisation de la figure 8,
- la figure 10, une variante de réalisation du dispositif de l'invention,
- la figure 11, un exemple de réalisation du système de l'invention comportant de commutateurs optiques intégrés,
- les figures 12 à 14, une variante de réalisation du système de l'invention,
- la figure 15, un système de superposition de faisceaux laser utilisant l'effet Brouillin,
- les figures 16 et 17, des variantes de réalisation des systèmes des figures 12 à 14 ;
- la figure 18, une figure explicative du système de l'invention ;
- les figures 19 et 20, d'autres variantes de réalisation du système de l'invention.

De façon générale, il convient de préciser, sans se référer aux figures, que l'objet du dispositif de l'invention est de coder les retards d'un signal lumineux sous forme d'une suite de p retards de bases qui permettront de générer à leur tour $2^p$ retards correspondant aux déphasages souhaités du signal hyperfréquence de façon à permettre la commande optique d'antennes à balayage. En effet, la réalisation optique de cette méthode de codage pour la génération de retards trouve une solution intéressante quand on utilise la propriété générale qu'ont les commutateurs optiques de posséder quatre portes.

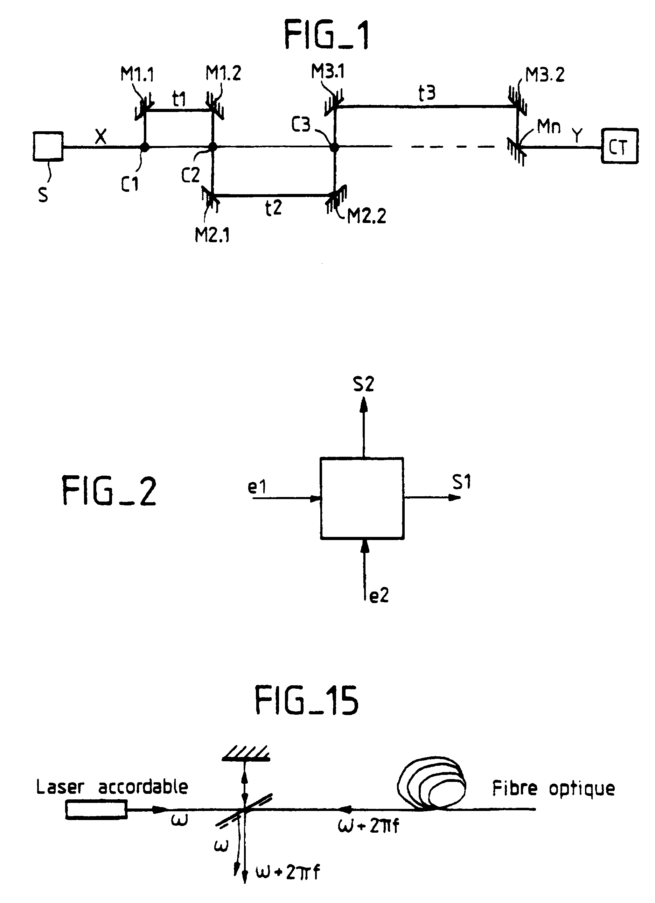

Le principe de base du codage des retards selon l'invention est illustré sur la figure 1. Ce système de codage met en évidence, qu'à l'aide de p retards différents et p commutateurs actifs, il est possible d'engendrer $2^p$ retards.

La figure 1 représente un trajet optique principal XY reliant une source lumineuse S à au moins un circuit utilisateur CT. En différents points de ce trajet optique des commutateurs optiques C1, C2, C3, C4... ont été disposés. Chaque commutateur possède, comme cela est représenté en figure 2, deux entrées e1 et e2 et deux sorties S1 et S2. Dans l'état passant (état OFF), la lumière entrant dans le commutateur par une entrée n'est pas déviée et sort sur la sortie opposée :

　　　l'entrée e1 est couplée à la sortie S1
　　　l'entrée e2 est couplée à la sortie S2.

Dans l'état commuté (état ON), la lumière entrant dans le commutateur par une entrée est déviée (réfléchie) vers la sortie qui lui est la plus proche. C'est ainsi que :

　　　l'entrée e1 est couplée à la sortie S2
　　　l'entrée e2 est couplée à la sortie S1.

Dans le dispositif de la figure 1, lorsque tous les commutateurs sont dans l'état passant, la lumière suit le trajet optique principal XY.

La fonction de chaque commutateur est d'aiguiller la lumière qu'il reçoit vers un trajet de retard de base qui retransmet la lumière au commutateur voisin. Entre deux commutateurs consécutifs on dispose donc, outre une portion du trajet optique principal, un trajet de retard de base. Les différents trajets de retard de base t1, t2, t3, t4 sont réalisés de longueurs différentes.

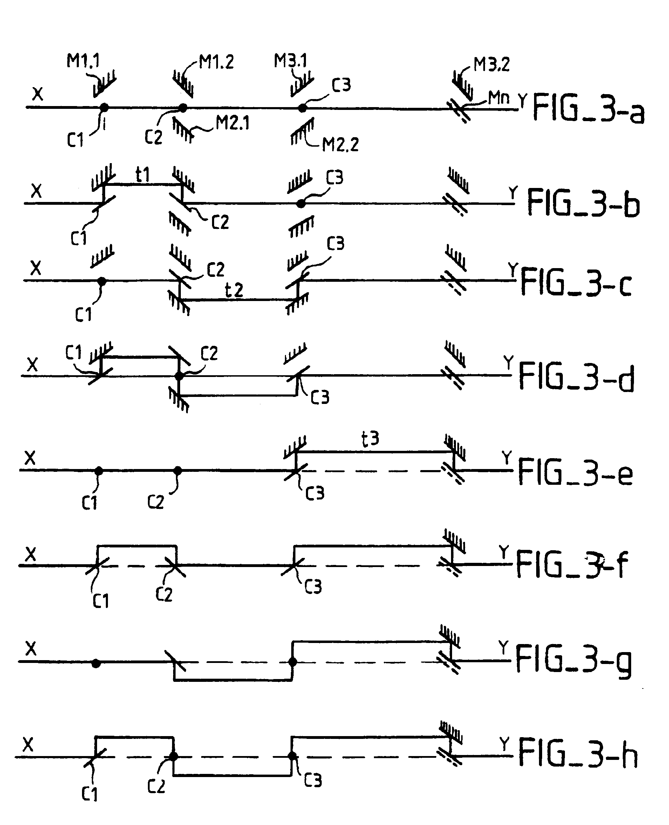

Selon l'exemple de réalisation de la figure 3, chaque trajet de retard de base couple deux commutateurs voisins à l'aide de miroirs tels que M1.1, M1.2, mais d'autres moyens, tels que des fibres optiques, pourraient être envisagés.

Les figures 3a à 3h représentent les différents états de commutation du système de la figure 1.

Sur ces figures un commutateur C1 à C3 à l'état passant (état OFF) est représenté par un point. Un commutateur à l'état commuté (état ON) est représenté par un trait épais incliné de façon à indiquer la direction de réflexion de la lumière par le commutateur.

Sur la figure 3a tous les commutateurs sont passants. Un faisceau lumineux provenant du point X parcourt le trajet optique principal et n'est pas retardé.

Sur la figure 3b, les commutateurs C1 et C2 sont commutés. Le commutateur C1 réfléchit la lumière vers le trajet de retard de base t1 et le commutateur C2 réfléchit la lumière vers le trajet optique principal.

Sur la figure 3c, le commutateur C2 réfléchit la lumière vers le trajet de retard de base t2 et le commutateur C3 réfléchit la lumière vers le trajet optique principal.

Sur la figure 3c, le commutateur C3 réfléchit la lumière vers le trajet de retard de base t3. Les miroirs M3.2 et Mn réfléchissent la lumière vers le trajet optique principal.

Les figures 3e à 3h représentent les autres combinaisons possibles des états de commutation.

Comme on peut le voir sur ces figures, le miroir Mn est un miroir semi-transparent. Les dispositifs de commutations sont inclinés par rapport à la direction du trajet optique principal de façon à pouvoir, lorsqu'il est à l'état commuté, soit réfléchir la lumière vers un trajet de retard de base, soit réfléchir la lumière provenant d'un trajet de retard de base vers le trajet optique principal XY.

Les commutateurs C1 à C3 et le miroir Mn sont donc inclinés, comme cela est visible sur la figure 3h de façon alternée à +45° et -45° par rapport à la direction XY.

Un exemple de réalisation particulièrement intéressant est celui où les retards souhaités sont équidistants. Pour cela, il suffit que les retards de base croissent selon une progression géométrique avec une raison de progression valant 2.

Sur la figure 3, les retards de base auront donc les valeurs suivantes :

$$t1 = t$$
$$t2 = 2t$$
$$t3 = 4t$$

Le principe du système de codage proposé s'explique de la manière suivante. On considérera (afin de simplifier l'exposé) que tous les retards sont exprimés par rapport à celui du chemin le plus court, lequel, par exemple correspond au cas où tous les commutateurs sont passants (figure 3a).

. Si les commutateurs C1 et C2 sont commutés et C3 passant alors on engendrera un retard $r = t_1$ (figure 3b)

. Si les commutateurs C2 et C3 sont commutés et C1 passant alors on engendrera un retard $r = t_2$ (figure 3c)

. Si les commutateurs C1 et C3 sont commutés et C2 passant alors on engendrera un retard $r = t_1 + t_2$ (figure 3d)

. Etc...

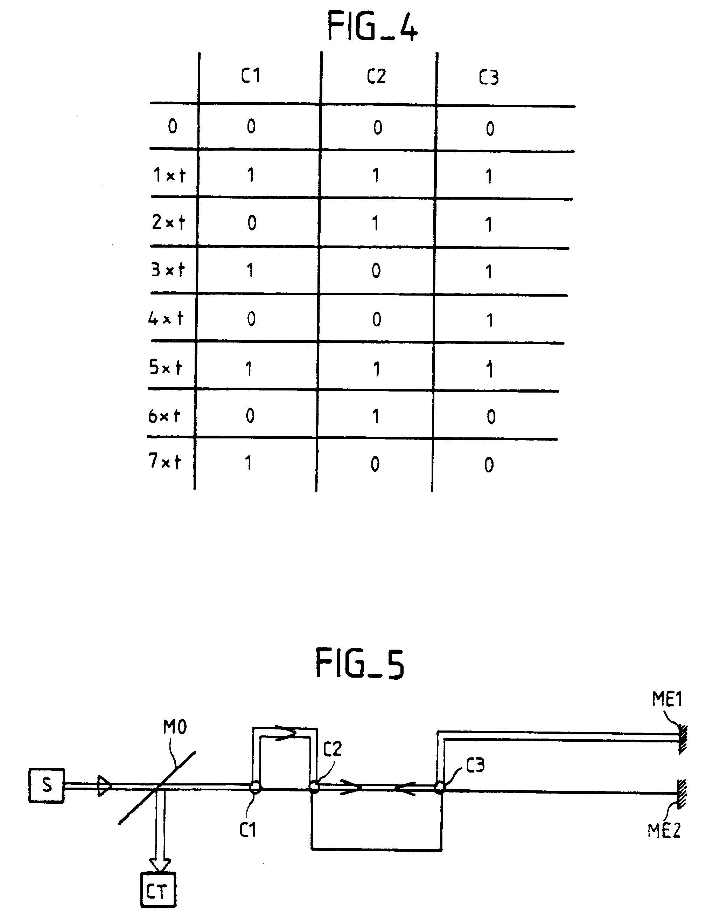

Le tableau de fonctionnement de la figure 4 contient tous les cas de fonctionnement des figures 3a à 3h. On voit sur ce tableau qu'avec une progression géométrique des retards de base de progression 2, on a des valeurs de retards équidistantes :

$$0, t, 2t, 3t, ... 7t.$$

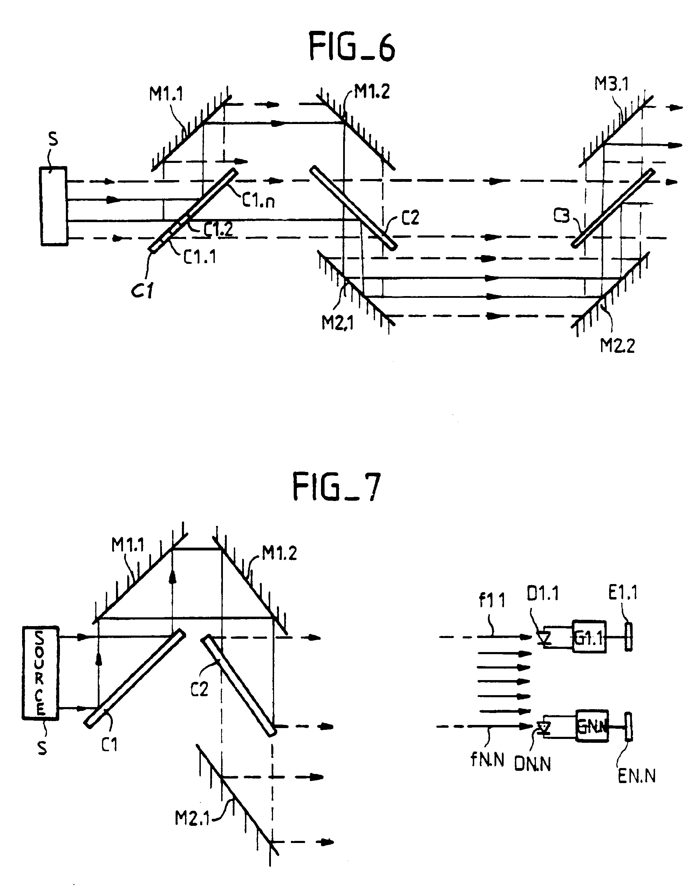

Le système de la figure 3 fonctionne en transmission. Le système de la figure 5 représente un système analogue fonctionnant en réflexion. Le faisceau émis par la source S est transmis au système par un miroir semi-réfléchissant MO. Après passage par les commutateurs C1, C2, C3 il est réfléchi par des miroirs d'extrémité ME1 et M2 et retourne par le même chemin pour être réfléchi par le miroir semi-réfléchissant MO vers les circuits utilisateurs CT.

Cette forme de réalisation est possible en raison du retour inverse de la lumière dans les commutateurs et permet une réalisation plus compacte.

Le principe général, décrit précédemment, s'applique simplement si on considère qu'à chaque noeud de commutation est placée une matrice de commutateurs comme cela est représenté en figure 6.

Selon le système de la figure 6, chaque commutateur C1 à C3 est constitué d'un ensemble de commutateurs disposés dans un même plan. Par exemple, selon une réalisation préférée, on disposera d'une cellule à cristal liquide pour réaliser un plan de commutateurs, chaque élément image de la cellule à cristal liquide constituant un commutateur.

La première cellule C1 est éclairée uniformément par le faisceau à traiter. Les différentes cellules C1 à C3 sont identiques et alignées selon la direction du faisceau à traiter. Chaque élément image de la première cellule C1 détermine une portion du faisceau lumineux à traiter.

Après traitement par le système de la figure 6, le faisceau de sortie est donc constitué d'autant de faisceaux élémentaires qu'il y a d'éléments image dans les cellules C1 à C3. Chaque faisceau élémentaire est affecté d'un retard correspondant au trajet qu'il a subi c'est-à-dire selon l'exemple décrit précédemment (3 retards de base), d'un retard choisi dans le tableau de la figure 4.

La figure 7 représente une application du système précédent à un système de commande d'une antenne à balayage.

La source S émet deux faisceaux optiques superposés de longueurs d'ondes différentes en vue d'obtenir un signal hyperfréquence. Un signal hyperfréquence peut être obtenu soit par modulation de l'amplitude de la porteuse optique (modulation directe de la source laser ou modulation externe) soit par superposition de deux faisceaux laser de fréquences différentes.

La superposition de deux faisceaux lasers de fréquences différentes peut être faite de différente façon :

a) - translation de fréquence dans une cellule de Bragg acousto-optique puis recombinaison des deux faisceaux obtenus comme cela est connu dans la technique.

b) - pour obtenir cette superposition on peut également prévoir que deux faisceaux sont issus de deux lasers indépendants, dont la largeur de raie est de quelques kHz et sont ensuite superposés. La détection cohérente par une photodiode de ce faisceau bifréquence fournit, un signal de battement à la fréquence résultant de la différence des fréquences des deux faisceaux. La fréquence du signal microonde ainsi obtenue peut être ajustée simplement par un contrôle de la température d'un des lasers (une température variable implique une fréquence variable). Des fréquences de quelques GHz à plusieurs dizaines de GHz peuvent être ainsi obtenues avec l'inconvénient cependant d'un ajustement ou d'un changement lent de cette fréquence (quelques 100 ms à 1s). La stabilisation en température des deux lasers est nécessaire car on peut observer un changement de fréquence de 3,1 GHz/° C avec un changement : 1 GHz/s.)

c) - Enfin la superposition de deux faisceaux lasers peut utiliser les phénomènes non linéaires de type diffusion Brillouin stimulée dans les fibres optiques.

La diffusion Brillouin stimulée dans les fibres est un effet à seuil. (quelques 100 $\mu$W à quelques 10 mW selon la longueur d'onde et la fibre employée).

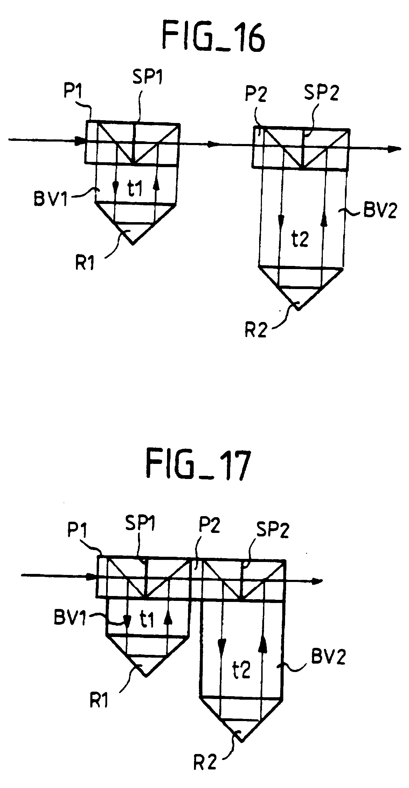

Un laser accordable est couplé dans une fibre comme cela est représenté en figure 15. Lorsque ce seuil est dépassé, prend naissance dans cette fibre une modulation d'indice périodique, de période $\lambda/2$. Cette modulation est due à un phénomène d'électrostriction et elle se propage à une vitesse v fixée par la nature du matériau et de même sens que l'onde de pompe. Cette dernière se réfléchit sur cette modulation d'indice et fournit ainsi une onde contrapropagative translatée en fréquence à $\omega + 2\pi f$. La fréquence f est déterminée par

$$f = 2.nv/\lambda$$

avec :

    $\lambda$, longueur d'onde de pompe,

    n, indice de la fibre.

    v, vitesse de l'onde contrapropagative dans la fibre.

Les faibles pertes obtenues dans les fibres (0,2 dB/km à quelques dB/km permettent d'utiliser de grandes longueurs de fibre. L'effet étant cumulatif on peut ainsi obtenir des coefficients de réflexion typique de 40 % (proportion de la pompe réfléchie dans la fibre en étant translatée). La finesse de cette translation est de l'ordre de quelques kHz à quelques 10 kHz pour des longueur de 1 km environ.

Elle est en outre accordable par modification de $\lambda$. Par exemple dans la silice où v = 6 000 m/s on a

    $\lambda = 0,8$ $\mu$m ; f = 22 GHz

    $\lambda = 1,06$ $\mu$m ; f = 16,5 GHz

    $\lambda = 1,5$ $\mu$m ; f = 11,5 GHZ

Ainsi un laser accordable, de type Ti Sapphire (émettant entre 0,6 et 1 $\mu$m de longueur d'onde) permet un accord entre, environ 30 GHz et 16 GHz. Un laser fixe associé à un oscillateur paramétrique optique (OPO), permettant d'explorer continûment les longueurs d'onde de 1 à 4 $\mu$m, permet de balayer les fréquence f de 16 à 4 GHz.

L'emploi d'autres fibres, (fibres fluorées, fibres dopées Ge, fibres monocristallines) permet de couvrir des domaines de fréquences différents (changement de v par rapport à la silice).

Le faisceau réfléchi ($\omega + 2\pi f$) est finalement superposé au faisceau incident (w). La détection cohérente de ce faisceau bi-fréquence fournit comme dans les brevets précédents un signal de battement et donc le signal hyperfréquence à f.

Sur la partie gauche de la figure 7 on retrouve les premiers éléments du système précédent. Sur la partie droite de la figure, le faisceau lumineux constitué de NxN faisceaux f1.1 à fN.N correspondant au nombre d'éléments image de chaque plan de commutateurs C1 à C3, est transmis à un ensemble de NxN diodes de détection D1.1 à DN.N. Ces diodes détectent les différents faisceaux f1.1 à fN.N déphasés entre eux selon les retards dont ils ont été affectés. Elles commandent ensuite des amplificateurs d'émission de signaux hyperfréquences à l'aide d'éléments d'antenne E1.1 à EN.N.

Le système de l'invention peut également être réalisé à l'aide de commutateurs dans lesquels il s'agit de commuter chaque faisceau élémentaire selon sa direction de polarisation.

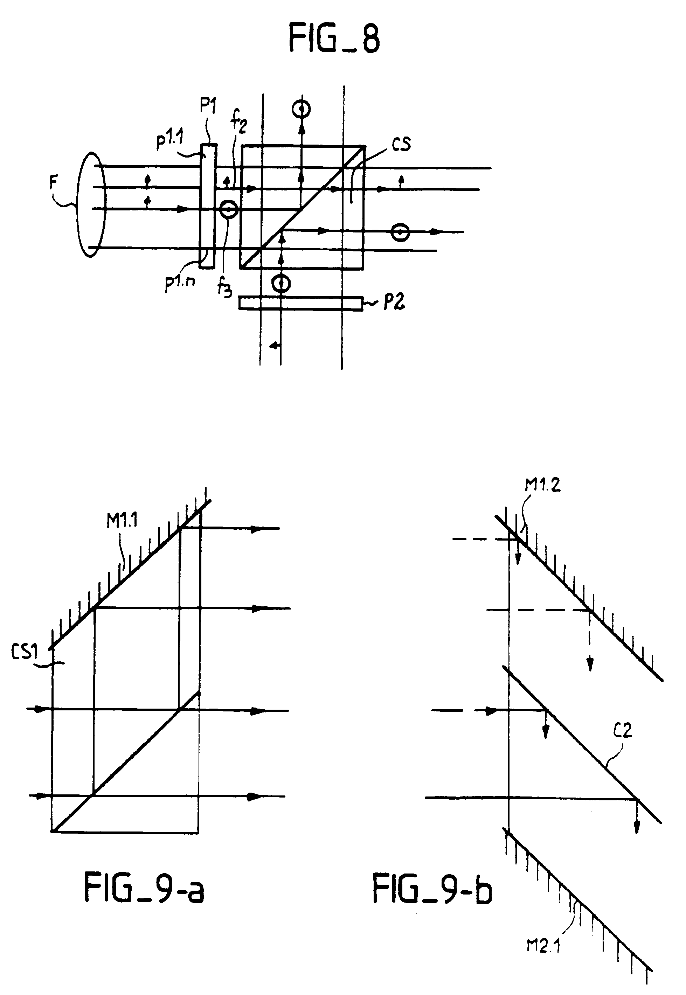

Pour cela chaque commutateur est réalisé comme cela est représenté en figure 8.

Un tel commutateur comporte un commutateur de polarisation d'entrée P1. Ce polariseur comporte un ensemble de polariseurs commutables p1.1 à p1.n. Selon une forme de réalisation préférée, ce commutateur est réalisé à l'aide d'une cellule à cristal liquide, chaque élément image d'une telle cellule permettant de faire tourner ou non la direction de polarisation d'une portion du faisceau d'entrée. C'est ainsi que deux portions de faisceau f2 et f3 peuvent avoir des directions de polarisation orthogonales. Pour être efficace, un tel système doit recevoir un faisceau F polarisé linéairement. Selon l'état de la cellule à cristal liquide, certains éléments d'image permettront d'avoir des portions de faisceaux lumineux sans tourner la direction de polarisation. Par contre, d'autres éléments d'image feront tourner la direction de polarisation de la lumière.

La lumière issue du commutateur de polarisation P1 est transmise à un cube séparateur par polarisation CS. Ce polariseur CS transmet donc les portions de faisceaux lumineux ayant une direction de polarisation déterminée (polarisation marquée par une flèche sur la figure 8) et réfléchit les portions de polarisation orthogonales (polarisation marquée par un point sur la figure).

Pour des raisons de simplicité technologique, il est intéressant d'associer, à chaque cube séparateur, deux commutateurs de polarisation P1 et P2, un commutateur étant associé à une face d'entrée du cube. On multiplie ainsi par 2 le nombre de possibilités de commutation. Cela est d'autant plus intéressant qu'on obtient une progression exponentielle des retards possibles selon le nombre de commutateurs.

La figure 9a représente une réalisation pratique d'un cube séparateur et d'un miroir associé. Selon cette forme de réalisation un demi-cube CS1 est réalisé sous la forme d'un prisme de section parallélépipédique et possède, opposée à la face servant de séparateur de polarisation, une face rendue réfléchissante par une métallisation. Appliquée à la figure 1, la structure de la figure 9a correspond au commutateur C1. Le commutateur C2 de la figure 1 sera alors réalisé comme représenté en figure 9b sous la forme de deux prismes identiques de formes parallélépipédiques avec des faces M1.2 et M2.1 réfléchissantes, parallèles entre elles et parallèles à la face de séparation de polarisation C2.

De telles formes de réalisation permettent de rendre le système compact.

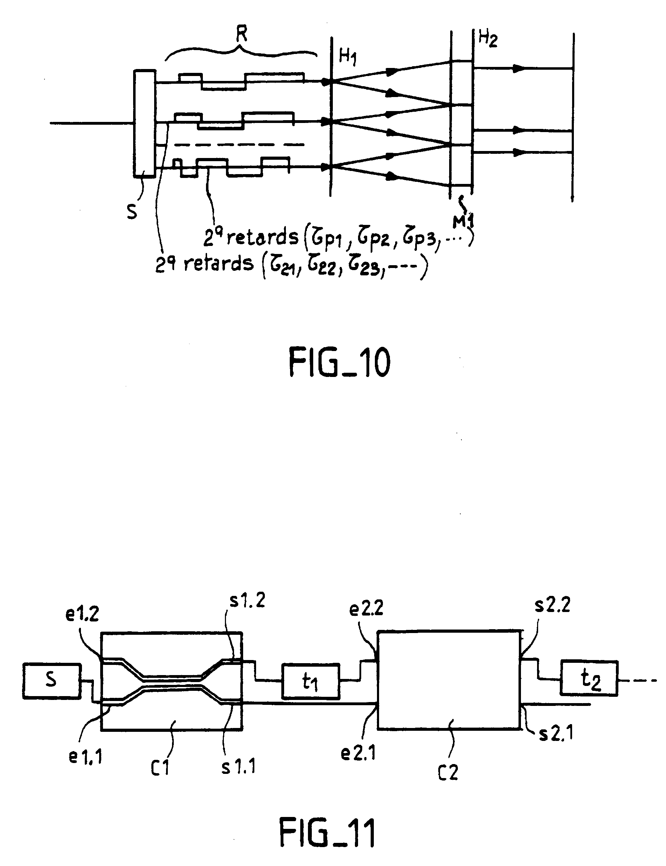

La figure 10 représente une application de l'invention à un dispositif dans lequel on réalise un certain nombre de retards optiques, puis on duplique tous les faisceaux obtenus de retards différents selon $N^2$ directions. Un dispositif de filtrage spatial M1 sélectionne ensuite, dans chaque direction, un faisceau représentant un retard particulier.

La source S émet un faisceau lumineux vers un dispositif R conçu comme cela a été décrit précédemment et capable d'induire sur p portions de faisceaux un nombre déterminé q de retards possibles. Plus précisément une portion de faisceau est affectée d'un retard choisi parmi q retards possibles.

Un dispositif holographique H1 permet ensuite de dupliquer les p portions de faisceaux. Cette duplication se fait selon $N^2$ directions possibles correspondant au nombre d'éléments d'antennes à commander.

Un filtre spatial M1 sélectionne dans chaque direction une portion de faisceau de façon à commander un élément d'antenne (E1.1) par l'intermédiaire d'une diode (D1.1) et d'un amplificateur hyperfréquence (G1.1) et cela à l'aide d'une seule portion de faisceau présentant un retard particulier choisi parmi les p retards fournis à la sortie du dispositif R.

Si on réalise un codage sous forme géométrique des retards, on pourra disposer de 2q retards, mais dont seulement p seront simultanément disponibles pour le choix a posteriori, c'est-à-dire pouvant être distribués sur chaque élément de l'antenne à balayage. On remarque que pour une atténuation égale de la puissance de départ de l'onde lumineuse on peut accroître exponentiellement le nombre de retards potentiels. De plus, il est intéressant de noter que même si uniquement p retards sont simultanément disponibles, le potentiel de 2q retards avec le même système permet d'enrichir considérablement le nombre de figures de rayonnement de l'antenne.

Notons enfin, qu'une méthode particulièrement avantageuse pour réaliser les commutateurs optiques dans le cas où les retards de base sont obtenus par propagation guidée de la lumière (dans une fibre monomode), consiste à utiliser des commutateurs optiques intégrés et en particulier à couplage par ondes évanescentes (COBRA).

L'invention a donc permis de réaliser un codage optique de retard. Le système de l'invention permet d'obtenir un nombre élevé de retard avec un dispositif peu complexe donc peu coûteux et présentant une faible atténuation de la puissance lumineuse.

A titre d'exemple, la réalisation de l'invention à l'aide de dispositifs optiques intégrés peut donner lieu à une configuration telle que représentée en figure 11. Chaque commutateur optique (C1) réalisé en optique intégrée comporte deux entrées (e1.1, e1.2) et deux sorties (s1.1 et s1.2) et permet de coupler une entrée à l'une ou l'autre des sorties selon son état de commutation.

L'entrée e1.1 du coupleur C1 reçoit de la source S un signal optique d'entrée. Le coupleur transmet ce signal, soit quasi directement à l'entrée e2.1 du commutateur C2, soit à l'entrée e2.2 du commutateur C2 par l'intermédiaire d'un circuit à retard t1. On voit donc que le fonctionnement du dispositif de la figure 11 est analogue à celui de la figure 1.

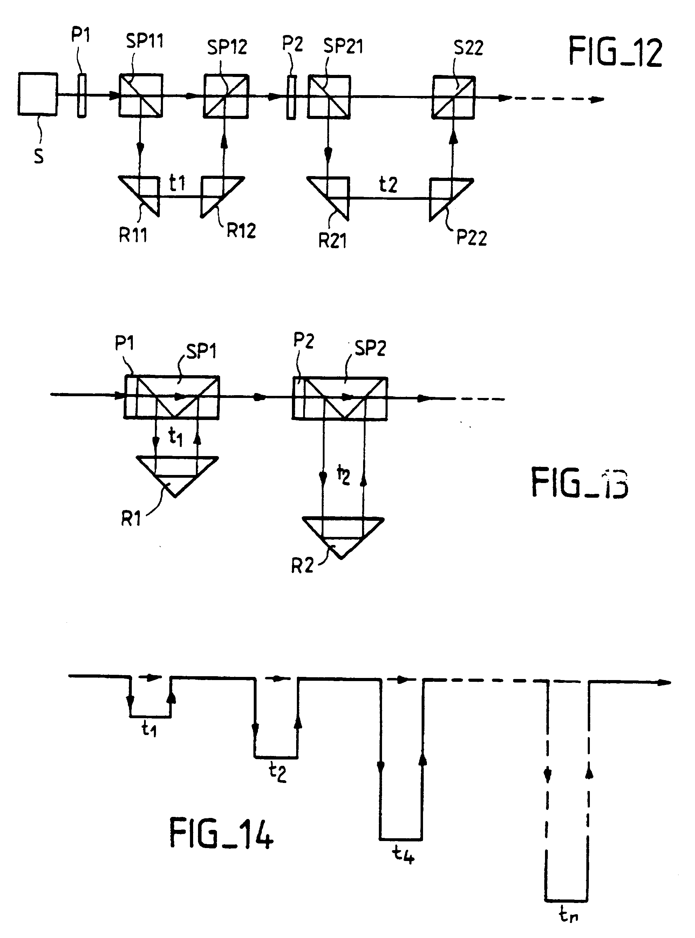

Les figures 12 à 14 représentent une variante de réalisation du système de création de retards selon l'invention. Cette variante est réalisée à l'aide de séparateurs de polarisations.

La création du premier retard t1 est obtenu à l'aide d'un polariseur spatial P1 recevant un faisceau lumineux d'une source S, un séparateur de polarisations SP11 transmettant la lumière d'une polarisation déterminée à un autre séparateur de polarisations SP12 et réfléchissant la lumière d'une autre polarisation à un moyen réfléchissant R11. Un autre moyen réfléchissant R12 retransmet la lumière venant de R11 vers le séparateur SP12.

La longueur du trajet lumineux passant par les moyens réfléchissants détermine le retard tl. Le second retard t2 est déterminé en écartant les séparateurs de polarisations et ainsi de suite.

Les polariseurs tels que P1 et P2 sont des polariseurs spatiaux ou modulateurs spatiaux de polarisation de telle façon qu'un faisceau a sa polarisation modulée spatialement. Une façon de réaliser ces polariseurs est d'utiliser des cellules à cristaux liquides dans lequel chaque élément image permet de faire tourner la polarisation d'une portion de faisceau.

Les séparateurs de polarisations SP11, SP12, SP21, SP22 peuvent être des cubes séparateurs de polarisations. Ils sont de constitutions identiques, c'est-à-dire ils réfléchissent le même type de polarisation et transmettent un autre type de polarisation).

Les moyens réfléchissants R11, R12, R21, R22 peuvent être des cubes à réflexion totale.

Un tel agencement présente l'avantage de ne nécessiter qu'un seul modulateur spatial par retard de base (t1, t2,...) à créer.

La figure 13 représente une forme de réalisation compacte du système de la figure 12.

Les séparateurs de polarisations tels que SP11 et SP12 sont réalisés en un seul bloc et ont en commun un prisme central. Le polariseur P1 est accolé à la face d'entrée du prisme d'entrée. Enfin, les moyens réfléchissants tels que R11, R12 sont réalisés sous la forme d'un seul prisme R1 similaire au prisme commun du séparateur SP1.

La valeur de chaque retard est déterminée par la distance du prisme R1 au séparateur SP1.

Ainsi, sur la figure 13, on voit que la distance du prisme R1 au séparateur SP1 détermine un certain retard t1 et que la distance du prisme R2 ou séparateur SP2 détermine un retard t2 plus élevé.

En utilisant ce type de configuration on peut alors, comme cela est représenté en figure 14, déterminer une série de retard de base t1, t2, t4, ...tn qui peuvent être par exemple en progression géométrique.

On notera qu'un tel système, pour fonctionner, nécessitera une commande centralisée des polariseurs (P1, P2...). En effet, la commande de chaque polariseur (P2 par exemple) dépendra de la polarité de chaque faisceau et donc de la polarisation donnée à chaque faisceau par le polariseur (P1 selon l'exemple pris) qui le précède.

Un avantage de ce dispositif fonctionnant en transmission réside dans le fait que, quelle que soit la valeur du retard choisi pour un point de l'antenne, la porteuse optique a traversé le même nombre de dioptre ce qui permet d'obtenir le même niveau de signal sur la photodiode quelle que soit la valeur du retard choisi.

Selon une variante de réalisation de l'invention représentée en figure 16, les séparateurs (SP1, SP2) sont reliés aux prismes (R1, R2) par des blocs de verres (BV1, BV2) de même nature que les séparateurs ou les prismes.

Ainsi la propagation des faisceaux se fait toujours dans un milieu d'indice. On obtient donc un gain sur l'encombrement du système. De la même manière, on obtient un gain sur l'angle de diffraction dû aux pixels des modulateurs spatiaux .

De plus, il est possible de coller tous les blocs les uns aux autres et aux modulateurs spatiaux comme cela est représenté en figure 17.

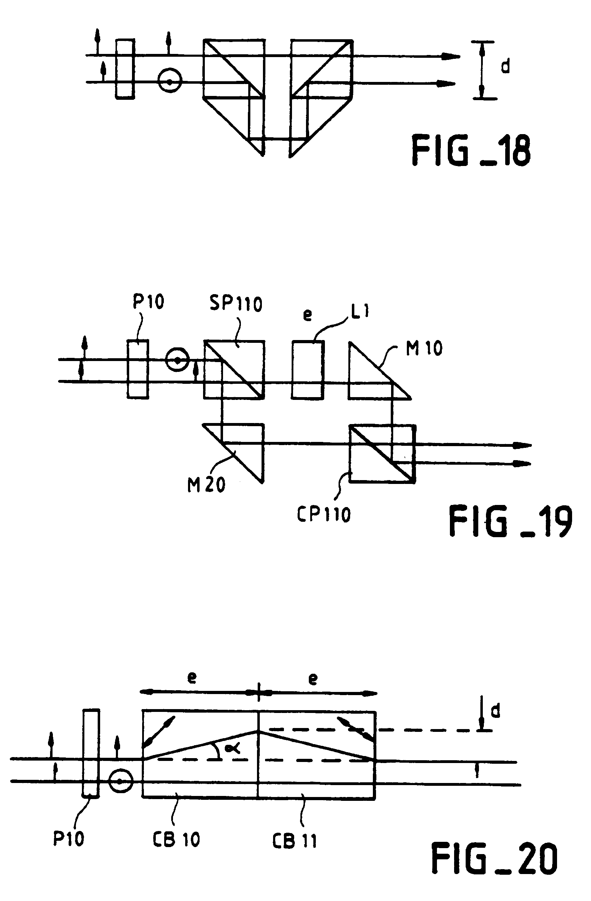

On voit sur la figure 18 que la plus petite valeur de retard vaut : $\tau = \dfrac{2d}{c} n$ où n est l'indice de réfraction des prismes. Cette valeur est donc limitée par la taille du modulateur spatial de lumière et des cubes séparateurs. Dans le cas d'une antenne fonctionnant purement en retards, il faut disposer de 10 bits de retards entre 0 et 16 λ/c (λ longueur d'onde hyperfréquence). En effet, six bits sont nécessaires entre O et λ/c pour minimiser l'amplitude des lobes secondaires. Quatre bits entre λ/c et 16 λ/c sont en outre nécessaire à la déflexion du faisceau hyperfréquence dans ± 45°, avec une large bande instantanée de fréquence. Pour une antenne fonctionnant à 3GHz, λ valant environ 9 cm, le plus petit incrément de retard vaut alors $\tau = λ/64c = 2dn/c$ d'où $d = λ/128 n \sim 500$ μm. Cette valeur n'est pas réaliste pour un modulateur spatial qui doit comporter de l'ordre de 32 x 32 pixels. Pour les faibles valeurs de retards l'invention prévoit la disposition de la figure 19.

Ce système comporte :
- un modulateur de polarisations P10, du type cellule à cristal liquide par exemple ;
- un séparateur de polarisation SP110 réfléchissant une polarisation et transmettant l'autre polarisation ;
- deux dispositifs réfléchissants M10 et M20 déterminant deux trajets optiques pour les deux polarisations. Ces deux trajets ont même longueur géométrique sensiblement mais l'un des trajets comporte une lame L1 plane à faces paralléles :
- un dispositif coupleur de polarisations CP110 regroupant les deux polarisations sur un même trajet optique.

Dans ce système, les chemins diffèrent grâce à la lame à faces parallèles L1, d'épaisseur e et d'indice n. On a ainsi $\tau = e.n/c$. Pour les premiers retards on choisira des lames d'épaisseurs de 500 μm, 1 mm, 2 mm...

La figure 20, représente une autre variante permettant d'obtenir des retards faibles.

Deux cristaux biréfringents CB10, CB11 sont accollés. L'orientation de leur axe principal est choisie, comme sur la figure, pour maximiser la déviation subie par une des polarisations. La disposition tête bêche des deux cristaux assure la coïncidence en direction et point de sortie des deux polarisations orthogonales. Dans ce cas la différence de chemin optique fournit un retard :

$$\tau = 2/c [(e^2 + d^2)^{½} - e)]. n$$
$$\tau = 2n/c.e.[(1 + tg^2\alpha)^{½} - 1]$$

Dans la calcite par exemple, d = 4 mm pour e = 36 mm, c'est-à-dire tg $\alpha$ = 1/9. Pour f = 3 GHz, alors e $\sim$ 80 mm pour le plus petit incrément. Pour des fréquences plus élevée, f = 10 à 100 GHz, on voit que des épaisseurs très raisonnables de calcite sont nécessaires (de 25 mm à 3 mm).

## Revendications

1. Dispositif de création de retards optiques comprenant un premier et un deuxième commutateurs (C1, C3) rangés selon un ordre déterminé, le premier commutateur comportant au moins une première entrée ainsi qu'au moins une première et une deuxième sorties permettant de coupler la première entrée à l'une ou l'autre des sorties, le deuxième commutateur comportant au moins une première et une deuxième entrées ainsi qu'une première sortie et permettant de coupler la première sortie à l'une ou l'autre des entrées ; ce dispositif étant arrangé de la manière suivante :
   - la première entrée du premier commutateur (C1) est connectée à une source (S) émettant un faisceau lumineux à traiter ;
   - la première sortie du premier commutateur (C1) est connectée à la première entrée du deuxième commutateur suivant (C2), et pour le deuxième commutateur (C3), cette première sortie est connectée à un circuit utilisateur (CT) ;
   - la deuxième sortie du premier commutateur est connectée à la deuxième entrée du deuxième commutateur suivant par l'intermédiaire d'un circuit à retard optique (t1, t2, t3) caractérisé en ce que la lumière issue de la source (S) possède au moins deux polarisations et que chaque commutateur est un séparateur de polarisations.

2. Dispositif de création de retards optiques selon la revendication 1, caractérisé en ce qu'il comporte plusieurs commutateurs, chaque commutateur comportant au moins une première et une deuxième entrées, la première sortie de chaque commutateur étant connectée à la première entrée du commutateur suivant, la première sortie du dernier commutateur (C3) étant connectée au circuit utilisateur (CT) la deuxième sortie de chaque commutateur étant connectée à la deuxième entrée du commutateur suivant par l'intermédiaire d'un circuit à retard optique (t1, t2, t3).

3. Dispositif de création de retards optiques selon la revendication 1, caractérisé en ce que les circuits à retards optiques (t1, t2, t3) induisent des retards différents dont les valeurs de retards constituent une progression géométrique.

4. Dispositif de création de retards optiques selon la revendication 1, caractérisé en ce qu'il comprend plusieurs circuits de création de retards élémentaires placés en série, chaque circuit comportant:
   - un modulateur de polarisation (P1) recevant un faisceau lumineux d'une source S et retransmettant un faisceau modulé en polarisations ;
   - un premier séparateur de polarisations (SP11) recevant le faisceau modulé en polarisations, transmettant la lumière d'une première polarisation et réfléchissant la lumière d'une deuxième polarisation ;
   - des moyens de réflexion (R11, R12) recevant la lumière réfléchie par le premier séparateur de polarisation et la réfléchissant ;
   - un deuxième séparateur de polarisation (SP12) recevant d'une part la lumière de la première polarisation et la retransmettant vers un circuit de création de retard suivant et d'autre part la lumière de la deuxième polarisation transmis par les moyens réfléchissants et réfléchissant cette lumière vers le circuit de création de retard suivant.

5. Dispositif de création de retards optiques selon la revendication 3, caractérisé en ce que les séparateurs de polarisations sont réalisés à l'aide de cubes séparateurs de polarisation.

6. Dispositif de création de retards optiques selon la revendication 4, caractérisé en ce que les séparateurs de polarisation (SP11,SP12) d'un même circuit de création de retard sont réalisé en un seul bloc et ont en commun un prisme, les moyens réfléchissants (R11, R12) étant réalisés à l'aide d'un prisme à réflexion totale analogue au prisme commun des séparateurs de polarisations.

7. Dispositif de création de retards optiques selon la revendication 1, caractérisé en ce qu'il comprend plusieurs circuits de création de retards élémentaires placés en série, chaque circuit comportant :
   - un modulateur de polarisation (P10) recevant un faisceau lumineux d'une source S et retransmettant un faisceau modulé en polarisations ;
   - un séparateur de polarisations (SP110) recevant le faisceau modulé, transmettant la lumière d'une première polarisation et réfléchissant la lumière d'une deuxième polarisation ;
   - un premier et un deuxième trajets optiques transmettant respectivement la première et la deuxième polarisations, l'un des deux trajets optiques comportant une lame à faces parallèles (L1) ;
   - un circuit (CP110) de recombinaison des deux polarisations.

8. Dispositif de création de retards optiques selon la revendication 1, caractérisé en ce qu'il comprend plusieurs circuits de création de retards élémentaires placés en série, chaque circuit comportant :

- un modulateur de polarisation (P1) recevant un faisceau lumineux d'une source S et retransmettant un faisceau modulé en polarisations ;
- un premier cristal biréfringent (CB 10) placé en série avec le modulateur de façon à ne pas dévier une première polarisation et à dévier une deuxième polarisation ;
- un deuxième cristal biréfringent (CB 11) de constitution similaire au premier cristal biréfringent accolé en tête bêche à celui-ci de façon à ne pas dévier la première polarisation et à dévier la deuxième polarisation.

9. Dispositif selon la revendication 1, caractérisé en ce que le circuit à retard comprend une lame à faces parallèles.

10. Dispositif selon la revendication 1, caractérisé en ce que le circuit à retard comprend deux cristaux biréfringents (CB10, CB11) similaires disposés en tête bêche.

11. Dispositif de commande optique d'une antenne à balayage comprenant un dispositif de création de retards optiques selon l'une quelconque des revendications 1 à 10, caractérisé en ce qu'il comprend :

- un réseau d'un nombre déterminé $N^2$ d'éléments (E1.1,....EN.N) d'antenne, les différents éléments étant arrangés selon un ordre déterminé et commandés chacun par un amplificateur hyperfréquence (G1.1,...GN.N);
- une source lumineuse (S) émettant simultanément au moins deux faisceaux colinéaires de fréquences différentes caractérisé en ce qu'il comporte également :
- $N^2$ dispositifs à retard comportant un nombre de trajets (f11...fN.N) optiques commutables recevant les deux faisceaux colinéaires et fournissant chacun un temps de propagation optique qui lui est propre,
- $N^2$ dispositif photodétecteurs (D1.1,...DN.N) couplés chacun à un amplificateur hyperfréquence (G1.1,.... GN.N)pour commander un élément d'antenne (E1.1,... EN.N).

12. Dispositif selon la revendication 11, caractérisé en ce que chaque dispositif à retard comporte un trajet optique de base et, connecté en parallèle avec différentes portions de ce trajet optique, des trajets (f11...fN.N) optiques secondaires commutables de longueurs différentes.

13. Dispositif selon la revendication 12, caractérisé en ce que les trajets optiques secondaires sont connectés au trajet optique de base à l'aide de commutateurs optiques (P1).

14. Dispositif selon la revendication 12, caractérisé en ce que les différents trajets optiques secondaires sont connectés en parallèle avec des zones successives du trajet optique de base.

15. Dispositif selon la revendication 12, caractérisé en ce que les différents retards apportés par les différents trejets (f11...fN.N) optiques varient selon une progression géométrique.

16. Dispositif selon la revendication 15, caractérisé en ce que la raison de la progression géométrique a pour valeur 2.

17. Dispositif selon la revendication 14, caractérisé en ce que les commutateurs optiques (P1) sont regroupés par ensemble de commutation, chaque ensemble étant affecté à une direction.

18. Dispositif selon la revendication 17, caractérisé en ce que chaque ensemble de commutation comporte une cellule d'éléments de commutation, chaque élément de commutation étant susceptible de prendre soit un état "passant", soit un état "réfléchissant", la lumière arrivant sur un élément de commutation "passant" étant retransmise sans être quasiment déviée, la lumière arrivant sur un élément de commutation "réfléchissant" étant réfléchie.

19. Dispositif selon la revendication 18, caractérisé en ce que la cellule d'éléments de commutation est une cellule à cristal liquide.

20. Dispositif selon la revendication 19, caractérisé en ce que la cellule d'éléments de commutation comporte un polariseur (F) situé à l'entrée .

21. Dispositif selon la revendication 18, caractérisé en ce que chaque cellule de commutation est comprise entre deux prismes.

22. Dispositif selon la revendication 11, caractérisé en ce qu'il comporte également situés entre les dispositifs à retard et les photodétecteurs :

- un dispositif de duplication (H1) permettant de dupliquer les faisceaux issus de chaque dispositif à retard selon un nombre déterminé de directions dupliquées,
- un dispositif de filtrage spatial (M1) comportant autant de filtres qu'il y a de directions dupliquées et de dispositifs à retard.

## Patentansprüche

1. Vorrichtung zum Erzeugen von optischen Verzögerungen, mit einem ersten und einem zweiten Schalter (C1, C3), die in einer bestimmten Reihenfolge angeordnet sind, wobei der erste Schalter wenigstens einen ersten Eingang sowie wenigstens einen ersten und einen zweiten Ausgang aufweist, was ermöglicht, den ersten Eingang mit dem einen oder dem anderen der Ausgänge zu verbinden, wobei der zweite Schalter wenigstens einen ersten und einen zweiten Eingang sowie einen ersten Ausgang aufweist, was ermöglicht, den ersten Ausgang mit dem einen oder dem anderen der Eingänge zu verbinden; wobei die Vorrichtung in der folgenden Weise angeordnet ist:
   - der erste Eingang des ersten Schalters (C1) ist mit einer ein zu verarbeitendes Lichtbündel abgebenden Quelle (S) verbunden;
   - der erste Ausgang des ersten Schalters (C1) ist mit dem ersten Eingang des nachfolgenden zweiten Schalters (C2) verbunden, und der erste Ausgang des zweiten Schalters (C3) ist mit einem Verbraucherkreis (CT) verbunden;
   - der zweite Ausgang des ersten Schalters ist mit dem zweiten Eingang des nachfolgenden zweiten Schalters über einen optischen Verzögerungskreis (t1, t2, t3) verbunden, dadurch gekennzeichnet, daß das von der Quelle (S) abgegebene Licht wenigstens zwei Polarisationen aufweist und daß jeder Schalter eine Polarisations-Trennvorrichtung ist.

2. Vorrichtung zur Erzeugung von optischen Verzögerungen nach Anspruch 1, dadurch gekennzeichnet, daß sie mehrere Schalter aufweist, wobei jeder Schalter wenigstens einen ersten und einen zweiten Eingang aufweist, wobei der erste Ausgang jedes Schalters mit dem ersten Eingang des nachfolgenden Schalters verbunden ist, wobei der erste Ausgang des letzten Schalters (C3) mit dem Verbraucherkreis (CT) verbunden ist und wobei der zweite Ausgang jedes Schalters mit dem zweiten Eingang des nachfolgenden Schalters über einen optischen Verzögerungskreis (t1, t2, t3) verbunden ist.

3. Vorrichtung zur Erzeugung von optischen Verzögerungen nach Anspruch 1, dadurch gekennzeichnet, daß die optischen Verzögerungskreise (t1, t2, t3) verschiedene Verzögerungen hervorrufen, deren Verzögerungswerte eine geometrische Reihe bilden.

4. Vorrichtung zur Erzeugung von optischen Verzögerungen nach Anspruch 1, dadurch gekennzeichnet, daß sie mehrere in Reihe angeordnete Kreise zur Erzeugung von Elementarverzögerungen aufweist, wobei jeder Kreis enthält:
   - einen Polarisationsmodulator (P1), der ein Lichtbündel von einer Quelle S empfängt und ein polarisationsmoduliertes Bündel weiterleitet;
   - eine erste Polarisations-Trennvorrichtung (SP11), die das polarisationsmodulierte Bündel empfängt und das Licht einer ersten Polarisation weiterleitet und das Licht einer zweiten Polarisation reflektiert;
   - Reflexionsmittel (R11, R12), die das von der ersten Polarisations-Trennvorrichtung reflektierte Licht empfangen und es reflektieren;
   - eine zweite Polarisations-Trennvorrichtung (SP12), die zum einen das Licht der ersten Polarisation empfängt und es zu einem nachfolgenden Kreis zur Erzeugung der Verzögerung überträgt sowie zum anderen das von den Reflexionsmitteln übertragene Licht der zweiten Polarisation empfängt, welches zu dem nachfolgenden Kreis zur Erzeugung der Verzögerung reflektiert wird.

5. Vorrichtung zur Erzeugung von optischen Verzögerungen nach Anspruch 3, dadurch gekennzeichnet, daß die Polarisations-Trennvorrichtungen durch Polarisations-Trennwürfel gebildet sind.

6. Vorrichtung zur Erzeugung von optischen Verzögerungen nach Anspruch 4, dadurch gekennzeichnet, daß die Polarisations-Trennvorrichtungen (SP11, SP12) desselben Kreises zur Erzeugung der Verzögerung in einem einzigen Block ausgebildet sind und ein gemeinsames Prisma aufweisen, wobei die Reflexionsmittel (R11, R12) mittels eines Totalreflexionsprismas gebildet sind, welches dem gemeinsamen Prisma der Polarisations-Trennvorrichtungen gleicht.

7. Vorrichtung zur Erzeugung von optischen Verzögerungen nach Anspruch 1, dadurch gekennzeichnet, daß sie mehrere in Reihe angeordnete Kreise zur Erzeugung von Elementarverzögerungen aufweist, wobei jeder Kreis enthält:
   - einen Polarisations-Modulator (P10), der ein Lichtbündel einer Quelle S empfängt und ein polarisationsmoduliertes Bündel weiterleitet;
   - eine Polarisations-Trennvorrichtung (SP110), die das modulierte Bündel empfängt und das Licht einer ersten Polarisation weiterleitet und das Licht einer zweiten Polarisation reflektiert;
   - einen ersten und einen zweiten optischen Weg, die die erste Polarisation bzw. die zweite Polarisation übertragen, wobei einer der beiden optischen Wege ein planparalleles Plättchen (L1) aufweist;
- einen Kreis (CP110) zur Rekombination der Polarisationen.

8. Vorrichtung zur Erzeugung von optischen Verzögerungen nach Anspruch 1, dadurch gekennzeichnet, daß sie mehrere in Reihe angeordnete Kreise zur Erzeugung von Elementarverzögerungen aufweist, wobei jeder Kreis enthält:
- einen Polarisations-Modulator (P1), der ein Lichtbündel einer Quelle S empfängt und ein polarisationsmoduliertes Bündel weiterleitet;
- einen ersten Doppelbrechungskristall (CB10), der so in Reihe mit dem Modulator angeordnet ist, daß er eine erste Polarisation nicht ablenkt und eine zweite Polarisation ablenkt;
- einen zweiten Doppelbrechungskristall (CB11), der den gleichen Aufbau wie der erste Doppelbrechungskristall aufweist und in zu dem ersten Kristall entgegengesetzter Ausrichtung angebracht ist, so daß er die erste Polarisation nicht ablenkt und die zweite Polarisation ablenkt.

9. Vorrichtung nach Anspruch 1, dadurch gekennzeichnet, daß der Verzögerungskreis ein planparalleles Plättchen aufweist.

10. Vorrichtung nach Anspruch 1, dadurch gekennzeichnet, daß der Verzögerungskreis zwei gleiche Doppelbrechungskristalle (CB10, CB11) aufweist, die in entgegengesetzter Ausrichtung angeordnet sind.

11. Vorrichtung zur optischen Steuerung einer Abtastantenne, mit einer Vorrichtung zur Erzeugung von optischen Verzögerungen nach einem der Ansprüche 1 bis 10, dadurch gekennzeichnet, daß sie enthält:
- ein Gitter aus einer bestimmten Anzahl $N^2$ von Antennenelementen (E1.1, ... EN.N), wobei die verschiedenen Elemente in einer vorbestimmten Ordnung angeordnet und jeweils von einem Ultrahochfrequenzverstärker (G1.1, ... GN.N) gesteuert sind;
- eine Lichtquelle (S), die gleichzeitig wenigstens zwei kolineare Bündel mit verschiedener Frequenz abgibt, dadurch gekennzeichnet, daß sie auch enthält:
- $N^2$ Verzögerungsvorrichtungen mit einer Anzahl von schaltbaren optischen Wegen (f1.1, ... fN.N), die die beiden kolinearen Bündel empfangen und jeweils eine ihnen eigene, optische Laufzeit bereitstellen,
- $N^2$ Photodetektorvorrichtungen (D1.1, ... DN.N), die jeweils mit einem Ultrahochfrequenzverstärker (G1.1, ... GN.N) verbunden sind, um ein Antennenelement (E1.1, ... EN.N) zu steuern.

12. Vorrichtung nach Anspruch 11, dadurch gekennzeichnet, daß jede Verzögerungsvorrichtung einen optischen Grundweg sowie mit verschiedenen Abschnitten dieses optischen Weges parallel verbundene, schaltbare optische Wege (f1.1, ... fN.N) mit verschiedenen Längen aufweist.

13. Vorrichtung nach Anspruch 12, dadurch gekennzeichnet, daß die optischen Sekundärwege mittels optischer Schalter (P1) mit dem optischen Grundweg verbunden sind.

14. Vorrichtung nach Anspruch 12, dadurch gekennzeichnet, daß die verschiedenen optischen Sekundärwege mit aufeinanderfolgenden Abschnitten des optischen Grundweges parallel verbunden sind.

15. Vorrichtung nach Anspruch 12, dadurch gekennzeichnet, daß die von den verschiedenen optischen Wegen (f1.1, ... fN.N) hervorgerufenen verschiedenen Verzögerungen sich in einer geometrischen Reihe verändern.

16. Vorrichtung nach Anspruch 15, dadurch gekennzeichnet, daß das Verhältnis der geometrischen Reihe einen Wert von 2 aufweist.

17. Vorrichtung nach Anspruch 14, dadurch gekennzeichnet, daß die optischen Schalter (P1) in Schaltgruppen zusammengefaßt sind, die jeweils einer Richtung zugeordnet sind.

18. Vorrichtung nach Anspruch 17, dadurch gekennzeichnet, daß jede Schaltgruppe eine Schaltelementzelle aufweist, wobei jedes Schaltelement in der Lage ist, entweder einen "durchlässigen" oder einen "reflektierenden" Zustand anzunehmen, wobei das auf ein "durchlässiges" Schaltelement treffende Licht quasi ohne Ablenkung weitergeleitet wird und das auf ein "reflektierendes" Schaltelement treffende Licht reflektiert wird.

19. Vorrichtung nach Anspruch 18, dadurch gekennzeichnet, daß die Schaltelementzelle eine Flüssigkristallzelle ist.

20. Vorrichtung nach Anspruch 19, dadurch gekennzeichnet, daß die Schaltelementzelle einen am Eingang angeordneten Polarisator (P) aufweist.

21. Vorrichtung nach Anspruch 19, dadurch gekennzeichnet, daß jede Schaltzelle zwischen zwei Prismen aufgenommen ist.

22. Vorrichtung nach Anspruch 11, dadurch gekennzeichnet, daß sie zwischen den Verzögerungsvorrichtungen und den Photodetektoren ebenfalls enthält:
- eine Duplikationsvorrichtung (H1), die ermöglicht, die von jeder Verzögerungsvorrichtung abgegebenen Bündel entlang einer vorbestimmten Anzahl von Duplikationsrichtungen zu duplizieren,
- eine räumliche Filtervorrichtung (M1), die so viele Filter aufweist, wie es Duplikationsrichtungen und Verzögerungsvorrichtungen gibt.

**Claims**

1. Device for creating optical delays comprising a first and a second switch (C1, C3) arranged in a determined order, the first switch comprising at least a first input and at least a first output and a second output allowing the coupling of the first input to one or other of the outputs, the second switch comprising at least a first and a second input and a first output and allowing the coupling of the first output to one or other of the inputs; this device being arranged as follows:
- the first input of the first switch (C1) is connected to a source (S) emitting a light beam to be processed;
- the first output of the first switch (C1) is connected to the first input of the following second switch (C2) and, for the second switch (C3), this first output is connected to a user circuit (CT);
- the second output of the first switch is connected to the second input of the following second switch by the intermediary of an optical delay circuit (t1, t2, t3), characterized in that the light coming from the source (S) has at least two polarizations and in that each switch is a polarization separator

2. Device for creating optical delays according to Claim 1, characterized in that it comprises several switches, each switch comprising at least a first and a second input, the first output of each switch being connected to the first input of the following switch, the first output of the last switch (C3) being connected to the user circuit (CT), the second output of each switch being connected to the second input of the following switch by the intermediary of an optical delay circuit (t1, t2, t3).

3. Device for creating optical delays according to Claim 1, characterized in that the optical delay circuits (t1, t2, t3) induce different delays whose delay values constitute a geometric progression.

4. Device for creating optical delays according to Claim 1, characterized in that it comprises several circuits for creating elementary delays placed in series, each circuit comprising:
- a polarization modulator (P1) receiving a light beam from a source S and retransmitting a beam modulated in polarizations;
- a first polarization separator (SP11) receiving the beam modulated in polarizations, transmitting the light with a first polarization and reflecting the light with a second polarization;
- reflection means (R11, R12) receiving the light reflected by the first polarization separator and reflecting it;
- a second polarization separator (SP12) receiving on the one hand the light with the first polarization and retransmitting it to a following delay-creating circuit and on the other hand the light with the second polarization transmitted by the reflecting means and reflecting this light to the following delay-creating circuit.

5. Device for creating optical delays according to Claim 3, characterized in that the polarization separators are produced using polarization-separating cubes.

6. Device for creating optical delays according to Claim 4, characterized in that the polarization separators (SP11, SP12) of the same delay-creating circuit are produced in a single block and share a common prism, the reflecting means (R11, R12) being produced by means of a total reflection prism similar to the common prism of the polarization separators.

7. Device for creating optical delays according to Claim 1, characterized in that it comprises several circuits for creating elementary delays placed in series, each circuit comprising:
- a polarization modulator (P10) receiving a light beam from a source S and retransmitting a beam modulated in polarizations;
- a polarization separator (SP110) receiving the modulated beam, transmitting the light with a first polarization and reflecting the light with a second polarization;
- a first optical path and a second optical path respectively transmitting the first polarization and the second polarization, one of the two optical paths comprising a plate with parallel faces (L1);
- a circuit (CP110) for recombining the two polarizations.

8. Device for creating optical delays according to Claim 1, characterized in that it comprises several circuits for creating elementary delays placed in series, each circuit comprising:
   - a polarization modulator (P1) receiving a light beam from a source S and retransmitting a beam modulated in polarizations;
   - a first doubly-refractive crystal (CB 10) placed in series with the modulator in order not to deflect a first polarization and to deflect a second polarization;
   - a second doubly-refractive crystal (CB 11) having a constitution similar to the first doubly-refractive crystal placed head-to-tail with the latter in order not to deflect the first polarization and to deflect the second polarization.

9. Device according to Claim 1, characterized in that the delay circuit comprises a plate with parallel faces.

10. Device according to Claim 1, characterized in that the delay circuit comprises two similar doubly-refractive crystals (CB10, CB11) disposed head-to-tail.

11. Device for the optical control of a scanning antenna comprising a device for creating optical delays according to any one of Claims 1 to 10, characterized in that it comprises:
   - an array of a determined number $N^2$ of antenna elements (E1.1, ... EN.N), the various elements being arranged according to a determined order and each controlled by a UHF amplifier (G1.1, ... GN.N);
   - a light source (S) simultaneously emitting at least two collinear beams having different frequencies, characterized in that it also comprises:
   - $N^2$ delay devices comprising a number of switchable optical paths (f11 ... fN.N) receiving the two collinear beams and each providing an optical propagation time which is characteristic of it,
   - $N^2$ photodetector devices (D1.1,...DN.N) each coupled to a UHF amplifier (G1.1, ... GN.N) in order to control an antenna element (E1.1, ... EN.N).

12. Device according to Claim 11, characterized in that each delay device comprises a basic optical path and, connected in parallel with different portions of this optical path, switchable secondary optical paths (f11 ... fN.N) having different lengths.

13. Device according to Claim 12, characterized in that the secondary optical paths are connected to the basic optical path by means of optical switches (P1).

14. Device according to Claim 12, characterized in that the various secondary optical paths are connected in parallel with successive zones of the basic optical path.

15. Device according to Claim 12, characterized in that the various delays produced by the various optical paths (f11 ... fN.N) vary according to a geometric progression.

16. Device according to Claim 15, characterized in that the ratio of the geometric progression has the value 2.

17. Device according to Claim 14, characterized in that the optical switches (P1) are grouped in switching assemblies, each assembly being allocated to a direction.

18. Device according to Claim 17, characterized in that each switching assembly comprises a cell of switching elements, each switching element being capable of assuming either a "passing" state or "reflecting" state the light arriving at a "passing" switching element being retransmitted virtually without being deflected, the light arriving on a "reflecting" switching element being reflected.

19. Device according to Claim 18, characterized in that the cell of switching elements is a liquid crystal cell.

20. Device according to Claim 19, characterized in that the cell of switching elements comprises a polarizer (F) located at the input.

21. Device according to Claim 18, characterized in that each switching cell is included between two prisms.

22. Device according to Claim 11, characterized in that it also comprises, located between the delay devices and the photodetectors:
   - a duplication device (H1) allowing the duplication of the beams coming from each delay device according to a specified number of duplicated directions,
   - a spatial filtering device (M1) comprising as many filters as there are duplicated directions and delay devices.

# FIG_1

# FIG_2

# FIG_15

FIG_3-a

FIG_3-b

FIG_3-c

FIG_3-d

FIG_3-e

FIG_3-f

FIG_3-g

FIG_3-h

# FIG_4

| | C1 | C2 | C3 |
|---|---|---|---|
| 0 | 0 | 0 | 0 |
| $1 \times t$ | 1 | 1 | 1 |
| $2 \times t$ | 0 | 1 | 1 |
| $3 \times t$ | 1 | 0 | 1 |
| $4 \times t$ | 0 | 0 | 1 |
| $5 \times t$ | 1 | 1 | 1 |
| $6 \times t$ | 0 | 1 | 0 |
| $7 \times t$ | 1 | 0 | 0 |

# FIG_5

# FIG_6

# FIG_7

# FIG_8

# FIG_9-a

# FIG_9-b

FIG_10

FIG_11

FIG_12

FIG_13

FIG_14

# FIG_16

# FIG_17

FIG _18

FIG _19

FIG _20